Europäisches Patentamt

European Patent Office

Office européen des brevets

(19)

(11) **EP 0 717 911 B1**

(12) **FASCICULE DE BREVET EUROPEEN**

(45) Date de publication et mention
de la délivrance du brevet:
**15.09.1999 Bulletin 1999/37**

(21) Numéro de dépôt: **95924368.4**

(22) Date de dépôt: **27.06.1995**

(51) Int Cl.⁶: **H04N 9/31**

(86) Numéro de dépôt international:
**PCT/FR95/00851**

(87) Numéro de publication internationale:
**WO 96/02112 (25.01.1996 Gazette 1996/05)**

(54) **DISPOSITIF DE VISUALISATION EN COULEURS**

FARBANZEIGEVORRICHTUNG

COLOUR DISPLAY DEVICE

(84) Etats contractants désignés:
**DE GB IT NL**

(30) Priorité: **08.07.1994 FR 9408476**

(43) Date de publication de la demande:
**26.06.1996 Bulletin 1996/26**

(73) Titulaire: **THOMSON-CSF**
**75008 Paris (FR)**

(72) Inventeurs:
- **LEHUREAU, Jean-Claude**
  **F-92402 Courbevoie Cédex (FR)**
- **LOISEAUX, Brigitte**
  **F-92402 Courbevoie Cédex (FR)**
- **JOUBERT, Cécile**
  **F-92402 Courbevoie Cédex (FR)**

(74) Mandataire: **Guérin, Michel**
**Thomson-CSF Propriété Intellectuelle,**
**13, Avenue du Président Salvador Allende**
**94117 Arcueil Cédex (FR)**

(56) Documents cités:
**EP-A- 0 465 171**

- **PATENT ABSTRACTS OF JAPAN vol. 18, no. 146 (P-1707) 10 Mars 1994 & JP,A,05 323 307 (SHUNPEI YAMAZAKI)**
- **PATENT ABSTRACTS OF JAPAN vol. 12, no. 366 (P-765) 30 Septembre 1988 & JP,A,63 118 125 (HITACHI)**
- **PATENT ABSTRACTS OF JAPAN vol. 11, no. 383 (P-646) 15 Décembre 1987 & JP,A,62 150 317 (CASIO)**

## Description

L'invention concerne un dispositif de visualisation couleurs et plus particulièrement un dispositif de visualisation couleurs à cristaux liquides.

Pour générer des images vidéo de grandes dimensions, on s'oriente actuellement vers l'utilisation de matrices actives à cristaux liquides (LCD) dans des dispositifs de projection.

La projection d'images couleurs est réalisable soit à partir de 3 matrices actives, chacune éclairée par l'une des composantes primaires rouge, verte ou bleue (R, V, B) soit à partir d'une seule matrice active trichrome, munie dans ce cas de filtres colorés.

L'intégration de filtres colorés R, V, B dans la structure de l'écran (LCD) permet de réaliser des dispositifs,de projection d'images couleur de conception simple : projecteur monovalve puisqu'ils sont constitués d'une source et d'un seul écran LCD.

Cependant, la présence de ces filtres colorés conduit à un faible rendement lumineux lié à l'absorption et à la répartition spatiale de ces filtres colorés qui divise par 3 la transmission effective de l'écran LCD.

Le coût d'un tel écran reste également élevé, puisqu'il est nécessaire de mettre en oeuvre des niveaux de masquage supplémentaires pour obtenir ces filtres colorés et de chercher à densifier les éléments images (pixels) nécessaires dans le cas d'un écran couleur (par rapport à un écran monochrome) si l'on souhaite réaliser ces derniers dans des dimensions raisonnables (diagonale inférieure à 6 pouces, où un pouce est égal à 2.54 cm).

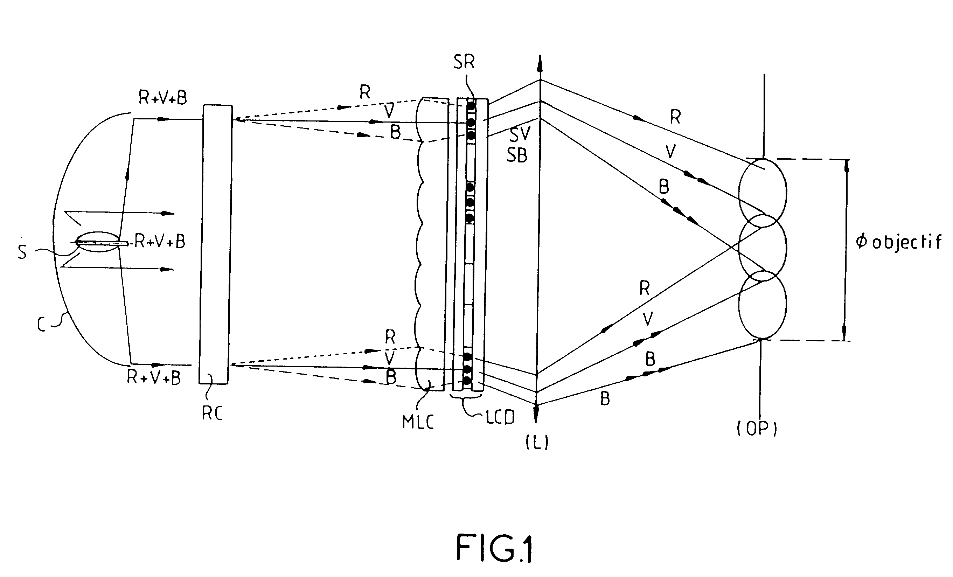

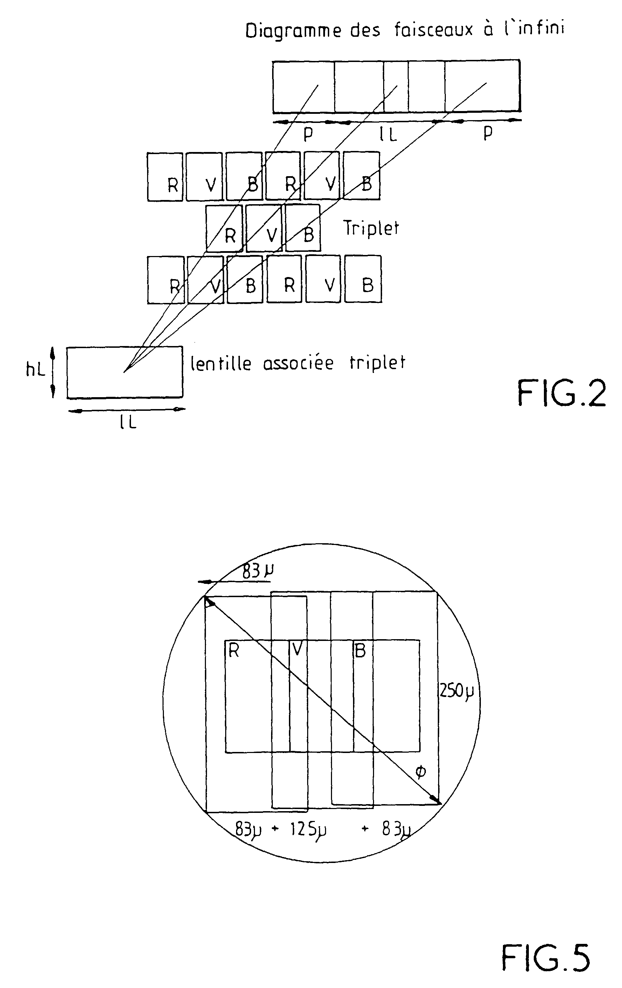

Pour pallier ces inconvénients, il est envisagé des écrans de visualisation dans lesquels les filtres colorés sont remplacés par un réseau diffractant, capable à partir d'une source blanche unique, de disperser dans trois directions différentes les faisceaux chromatiques rouge, vert, bleu (R, V, B). A l'aide de réseaux de lentilles permettant de focaliser la lumière de chaque gamme chromatique sensiblement sur un pixel de l'écran, il devient ainsi possible de réaliser un écran trichrome sans filtres colorés, compatible avec la projection monovalve. Chaque lentille est en correspondance avec un dot, représentatif d'un triplet de sous-pixels (R, V B). La figure 1 illustre un dispositif de visualisation selon cet art connu. Voir, par example, EP-A-0 465 171. Une source (S) d'une certaine étendue génère une lumière blanche comprenant les composantes chromatiques (R, V, B). L'ensemble de ces composantes est envoyé via un collimateur sur le réseau dispersif (RC) qui génère alors des faisceaux de direction différente (R, V, B). Un réseau de lentilles (MLC) permet de focaliser ces faisceaux sur des pixels de la matrice active (LCD). Les taches (SR, SV, SB) sont représentatives des images rouge, verte et bleue de la source (S) dans les différents pixels qui permettent ainsi de concentrer tout le flux lumineux issu de la source (S) dans la matrice active. En sortie de la matrice, une lentille de champ (L) permet de faire converger l'ensemble des faisceaux colorés dans une optique de projection (OP). Cependant la dispersion chromatique utilisée dans ce type de dispositif génère un étalement horizontal des faisceaux, qui nécessite alors une ouverture accrue de l'optique de projection dans le sens horizontal alors que l'ouverture verticale de cette optique n'est pas exploitée. La figure 2 illustre cette dispersion. Pour une lentille dont la section présente des dimensions $h_L$ et $e_L$, si p représente le pas séparant deux centres de sous-pixels on obtient un étalement horizontal de p de chaque côté de l'image de la lentille.

Afin d'utiliser au mieux l'ouverture classiquement circulaire des objectifs de projection, l'invention propose un dispositif de visualisation permettant de résoudre au mieux ce problème d'inadéquation de l'utilisation d'un réseau chromatique dispersif couplé à un ensemble de triplets de sous-pixels avec la géométrie des optiques de projection.

Plus précisément, l'invention a pour objet un dispositif de visualisation couleurs comme défini dans la revendication 1.

Dans le dispositif selon l'invention, le modulateur de lumière peut avantageusement être un écran à cristal liquide. Le réseau de lentilles sphériques (MLC) peut être accolé au modulateur spatial de lumière (LCD).

L'invention sera mieux comprise et d'autres avantages apparaîtront à la lecture de la description qui va suivre donnée à titre non limitatif, et des figures annexées parmi lesquelles :

- la figure 1 illustre un exemple de dispositif de visualisation selon l'art connu, utilisant un réseau diffractant ;
- la figure 2 schématise l'étalement des faisceaux lumineux, au niveau d'une optique de projection dans un dispositif de visualisation tel que celui illustré en figure 1 ;
- les figures 3a et 3b illustrent des exemples de dispositions des éléments images d'un écran à cristal liquide ;
- la figure 4 schématise la superposition d'un réseau de lentilles sur une structure en "DELTA" dans un exemple de dispositif de visualisation selon l'invention ;
- la figure 5 illustre la superposition des images d'une lentille réalisées par l'illumination des trois faisceaux rouge, vert, bleu dans un exemple de dispositif selon l'invention.

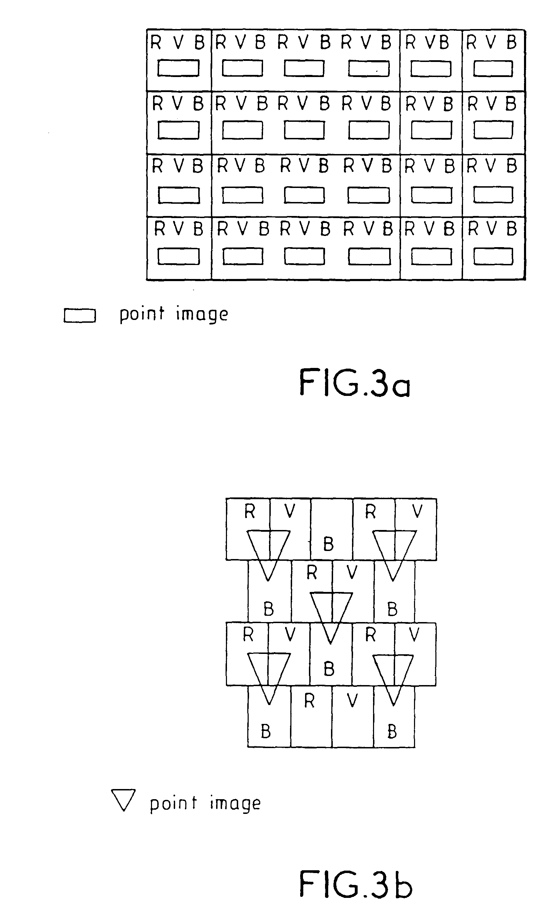

On rappelle que dans les dispositifs de visualisation utilisant une matrice active (LCD), un ensemble de trois sous-pixels (R, V, B) permet de définir un pixel blanc (D), cet ensemble est généralement appelé dot. Les figures 3a et 3b donnent ainsi des exemples de répartitions de couleurs dans un dot. La figure 3a représente une disposition selon laquelle les pixels d'une même couleur sont alignés selon une direction verticale (configuration en "stripe"). La figure 3b représente une disposition selon laquelle les pixels d'une même couleur sont alignés selon une direction inclinée mais ne se touchent pas. Dans cette configuration encore appelée structure en "DELTA", les triplets élémentaires sont distribués en quinconce et deux lignes sont utilisées pour définir une série de points blancs contrairement à la configuration décrite en figure 3a dans laquelle une ligne correspond à une série de points blancs.

Cette configuration en "DELTA" est particulièrement intéressante dans la mesure où elle permet d'utiliser pour une même surface de matrice active, N/2 points blancs, si N est le nombre de points blancs utilisés dans une configuration type "stripe", pour obtenir la même résolution image comme l'illustre la comparaison entre les figures 3a et 3b. De plus, la structure dite en "DELTA" conduit à des sous-pixels élémentaires de géométrie mieux adaptée à celle de l'image circulaire de la source. En effet pour obtenir la même résolution spatiale en ligne et en colonne, un pixel en "stripe" doit être carré, de côté ps. Ceci implique des dimensions de pixels élémentaires ps et ps/3.

Dans la structure en "DELTA" telle que représentée en figure 3b, la fréquence spatiale en colonne identique à celle correspondant à une structure en "stripe", correspond à une dimension h de sous-pixel élémentaire alors que la fréquence spatiale en ligne correspond à $\frac{3}{2}1$ (l autre dimension du sous-pixel). Il apparaît alors que la surface élémentaire d'un sous-pixel en "stripe" est égale à ps x ps/3, alors qu'en structure "DELTA" cette surface élémentaire h$\times$1=ps$\times\frac{3}{2}$ps. Dans cette dernière structure, on dispose de sous-pixels élémentaires de plus grande surface et surtout mieux adaptés à la géométrie circulaire de l'image de la source que l'on cherche à focaliser dans chaque sous-pixel élémentaire.

Le principe général de fonctionnement du dispositif selon l'invention peut être décrit précisément à partir de la figure 1.

La fonction du séparateur (RC) est de séparer angulairement les trois composantes spectrales de la source (S) d'éclairage collimaté. Les trois bandes spectrales sont ensuite focalisées suivant trois axes dans le plan focal de chaque lentille. Dans l'exemple schématisé en figure 1, le faisceau (V) de couleur verte est normal au plan focal des lentilles (MLC) et les faisceaux (R) rouge et (B) bleu sont symétriques par rapport à cette normale et font un angle d'incidence $\theta i$. Par conséquent, en adaptant d'une part l'angle d'incidence $\theta i$ de chaque composante spectrale sur les lentilles sphériques et d'autre part la focale f de ces lentilles on peut réaliser simultanément :

- la focalisation successive de chaque couleur dans le plan de la matrice active (LCD) et centrée sur chaque ligne de sous-pixels adressée par la même couleur. Les caractéristiques ($\theta i$, f) du dispositif dépendent de la taille de la matrice active (LCD), du nombre de pixels et de la répartition des sous-pixels dans un dot ;
- un gain sur le taux de transmission de la matrice (LCD) ; lorsque la bande colorée focalisée à une dimension inférieure à celle du sous-pixel élémentaire. La valeur de ce gain dépend des paramètres suivants, l'ouverture de la lentille sphérique, l'étendue géométrique de la source d'éclairage ($E_s$) et la taille de la matrice (LCD) caractérisée par sa diagonale (D).

La fonction de séparateur (RC) peut avantageusement être assurée par un réseau diffractif dont le pas est perpendiculaire à la direction d'alignement des sous-pixels R, V, B.

Le séparateur (RC) peut comporter un composant à microstructures de phases (variations d'indices ou reliefs) obtenus par enregistrement optique dans un matériau photosensible.

On propose ici un exemple de réalisation du dispositif adapté à une taille d'écran LCD possédant des sous-pixels R, V, B répartis en triade.

Les caractéristiques de l'écran LCD sont les suivantes :

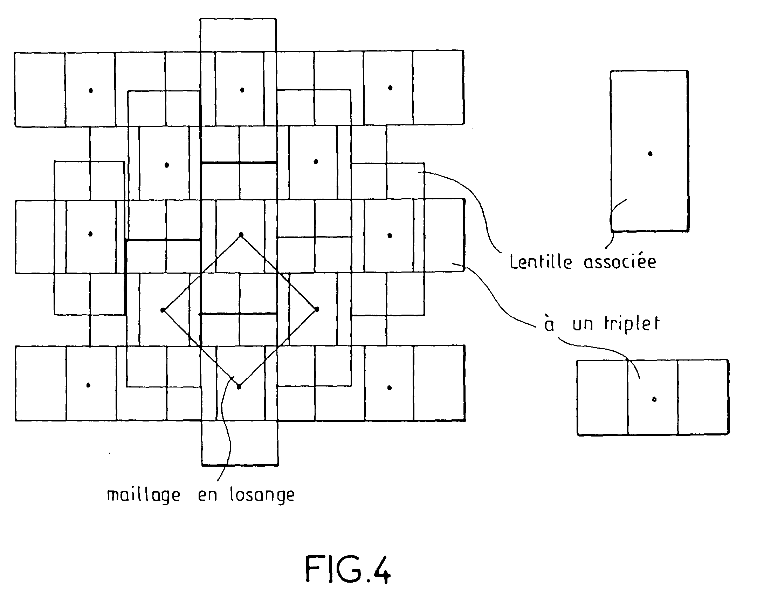

- un format 16/9, une diagonale de 4 pouces, une image définie par 480 lignes et 640 colonnes, pour une cellule de 80 x 60 mm$^2$ et des sous-pixels élémentaires de 125 $\times \frac{250}{3}$ μm$^2$ si les dimensions de trois sous-pixels R, V, B sont 125 $\times \frac{125}{3}$ μm$^2$. Selon les technologies classiques LCD, la largeur de trait nécessaire à l'adressage des pixels est voisin de 15 μm (trait qui masque une partie du pixel transparent) ;
- le réseau de microlentilles peut être réalisé directement sur l'une des contre-lames de l'écran LCD et être tel que celui représenté en figure 4.

En utilisant une source d'éclairage S, d'étendue géométrique $E_S$ = 80 mm$^2$-sr, nous allons comparer les performances obtenues en flux lumineux capable de passer dans une optique de projection donnée.

En effet la valeur limite de l'étendue géométrique $E_S$(max) de la source dépend de la taille de l'écran LCD. Elle peut être exprimée de la manière suivante en fonction des différents paramètres du dispositif

$$E_S(max) = 400\ D^2 \times (\phi_f^2 / f^2)$$

où

D est la diagonale de l'écran exprimée en pouces
f la focale des lentilles
$\phi_f$ : la largeur utile du pixel (pixel moins la largeur de trait)

En considérant que l'image de la source dans le plan focal de la lentille est de dimension égale à la largeur utile d'un sous-pixel et donc que $E_S = E_S$(max) on peut déterminer f et donc le tirage t dans le verre t = f.n, ce tirage t correspondant à la distance entre la matrice de lentilles et la cellule à cristal liquide.

Il est ainsi possible à partir du calcul de la focale f, de déterminer l'ouverture de l'optique de projection N nécessaire pour collecter l'ensemble des images des sous-pixels R, V, B définies par le réseau de lentilles, en tenant compte de l'étalement desdites images.

En effet, on peut calculer l'ouverture N de l'objectif nécessaire à la collection des trois flux lumineux R, V, B. Car N = $t_{objectif}/\phi_{objectif}$ avec t tirage de l'objectif de projectif et $\phi$ objectif le diamètre illustré en figure 1. Et par homothétie N = t/$\phi$ avec $\phi$ représentant la dimension de l'étalement des trois éclairements R, V, B (illustré en figure 5). Ce diamètre $\phi$ correspond à la diagonale du rectangle défini par les dimensions 250 μm x (80 + 125 + 83)μm. Soit encore 385 μm.

Ces calculs ont été réalisés dans trois cas de figures pour comparer le dispositif selon l'invention à d'autres types de dispositifs selon l'art connu. Les résultats sont regroupés dans le tableau (I) ci-dessous.

| Configuration | 1er cas art connu | 2ème cas art connu | 3ème cas invention |
|---|---|---|---|
| Configuration | stripe | delta | delta |
| masque | 15 μm | 15 μm | 15 μm |
| diagonale | 4 pouces | 4 pouces | 4 pouces |
| nombre de points | 480 x 640 | 480 x 320 | 480 x 320 |
| dimensions du pixel blanc | 125 x 125 | 125 x 250 | 125 x 250 |
| dimensions d'un sous-pixel | 125 x 125/3 | 125 x 250/3 | 125 x 250/3 |
| dimensions d'une lentille | 125 x 125 | 125 x 250 | 125 x 250 |
| dimensions d'une lentille | 125 x 125 | 125 x 250 | 125 x 250 |
| orientation des lentilles/pixels | homothétiques | homothétiques | orientées à 90° |
| tirage t | 360 μm | 900 μm | 900 μm |
| ouverture N | 0,8 | 1,2 | 1,5 |

Dans le cas de figure n° 1, on parvient à un type de lentille et un type d'objectif non réalistes (lentilles sur une contre-lame de 300 μm, difficile à réaliser). On est alors contraint de limiter notablement le flux de ce type de projecteur.

Dans le cas de figure n° 2, on obtient certes un type de lentille réaliste (contre-lame de 900 μm) mais un objectif très ouvert, difficilement envisageable. Il faut dans ce cas choisir des lentilles avec un tirage plus important pour augmenter l'ouverture N. Le flux projeté est alors réduit.

Dans le cas de figure de l'invention, on déterminer des valeurs tout à fait réalistes de tirage et d'ouverture permettant de faire passer un flux important de lumière.

En effet il est possible de faire passer efficacement le flux d'une lampe de 150 W, d'étendue $E_S = 80$ mm²sr dans une cellule de 4 pouces, utilisant des microlentilles sur une contre-lame de 900 μm. On obtient alors à partir d'un flux initial de 12 000 lumens et tenant compte de l'efficacité classique d'une matrice active à cristal liquide (5 %) et du rapport de surface de la cellule à un cercle circonscrit (60 %), un flux de sortie de l'ordre de 300 à 400 lumens.

Le tableau (II) ci-joint fournit les performances obtenues dans les cas①,②et③avec une même ouverture de projection réaliste (N = 1,5), et permet la comparaison avec une matrice active utilisant des filtres colorés.

| Configuration | Filtres colorés Pas de lentille | Stripe + lentilles homothétiques | delta + lentilles homothétiques | delta + lentilles optimisées |
|---|---|---|---|---|
| tirage (µm) | sans | 900 | 1150 | 900 |
| flux (lumens) | 50 | 55 | 220 | 350 |

**Revendications**

1.  Dispositif de visualisation couleurs comprenant :

    -   une source de lumière (S) émettant simultanément plusieurs gammes de composants chromatiques (R, V, B) ;
    -   un modulateur spatial de lumière (LCD) comprenant un ensemble de triplets, alignés selon un axe x et disposés selon un axe y perpendiculaire à l'axe x, chacun des triplets comportant trois sous-pixels alignés selon l'axe x, chaque sous-pixel ayant une dimension $sp_x$ selon l'axe x, chaque sous-pixel correspondant à une composante chromatique (RC) séparant angulairement selon des directions différentes la lumière des différentes gammes chromatiques (R, V, B) en faisceaux étalés selon l'axe x ;
    -   un séparateur chromatique (RC) séparant angulairement selon des directions différentes, la lumière des différentes gammes chromatiques (R, V, B) ;
    -   un réseau de lentilles sphériques (MLC) permettant de focaliser la lumière de chaque gamme chromatique sensiblement sur un sous-pixel, ledit réseau de lentilles ayant des dimensions sensiblement égales à celles du modulateur spatial de lumière et chaque lentille ayant une section définie par les dimensions $l_L$ et $h_L$, la dimension $l_L$ étant définie selon l'axe x et la dimension $h_L$ étant définie selon l'axe y ;
    -   une optique de projection (DP) ;

    caractérisé en ce que la section d'une lentille a la même surface que celle d'un triplet, la dimension $l_L$ étant plus faible que la dimension $3sp_x$ et ladite dimension $l_L$ étant inférieure à la dimension $h_L$ de manière à résoudre l'inadéquation de l'utilisation d'un réseau chromatique dispersé couplé à un ensemble de triplets de sous-pixels avec la géométrie de l'optique de projection.

2.  Dispositif de visualisation couleurs selon la revendication 1, caractérisé en ce que les sous-pixels d'une même couleur sont alignés selon une direction inclinée par rapport à l'axe x, et ne sont pas adjacents et que le centre de chaque lentille correspond sensiblement avec le centre d'un sous-pixel d'une même couleur.

3.  Dispositif de visualisation couleurs selon l'une des revendications 1 ou 2, caractérisé en ce que la section des lentilles est un rectangle identique à celui défini par chaque triplet, mais orienté perpendiculairement audit triplet dans le plan (Px, Py).

4.  Dispositif de visualisation couleurs selon l'une des revendications 1 à 3, caractérisé en ce que le séparateur chromatique (RC) comporte un composant à microstructures de phases (variations d'indices ou reliefs) obtenus par enregistrement optique dans un matériau photosensible.

5.  Dispositif de visualisation couleurs selon l'une des revendications 1 à 4, caractérisé en ce que le modulateur spatial de lumière (LCD) est un écran à cristal liquide.

6.  Dispositif de visualisation couleurs selon l'une des revendications 1 à 5, caractérisé en ce que le réseau de lentilles (MLC) est accolé au modulateur spatial de lumière (LCD).

**Patentansprüche**

1.  Vorrichtung zur farblichen Bildwiedergabe,

    -   mit einer Lichtquelle (S), die zugleich mehrere Bereiche von Farbkomponenten (R, G, B) emittiert,
    -   mit einem räumlichen Lichtmodulator (LCD), der ein System von Dreiergruppen aufweist, die gemäß einer Achse x fluchtend und gemäß einer dazu senkrechten Achse y angeordnet sind, wobei jede der Dreiergruppen drei Unterpixel in Flucht entlang der Achse x aufweist und jedes Unterpixel eine Abmessung $sp_x$ entlang der

Achse x besitzt und einer Farbkomponente entspricht

- mit einem Farbseparator (RC), der das Licht der verschiedenen Farbkomponenten (R, G, B) in entlang der x-Achse verteilte Strahlen winkelmäßig in unterschiedliche Richtungen trennt,
- mit einem Netz von sphärischen Linsen (MLC), das das Licht jeder Farbkomponente im wesentlichen auf ein Unterpixel fokussiert, wobei das Netz von Linsen Abmessungen besitzt, die im wesentlichen denen des räumlichen Lichtmodulators gleichen, wobei jede Linse eine durch die Abmessungen $l_L$ und $h_L$ definierte Sektion besitzt, wobei die Werte $l_L$ entlang der x-Achse und $h_L$ entlang der y-Achse definiert sind,
- mit einer Projektionsoptik (OP),

dadurch gekennzeichnet, daß die Sektion einer Linse die gleiche Fläche wie eine Dreiergruppe besitzt, wobei die Abmessung $l_L$ geringer als der Wert $3sp_x$ und die Abmessung $h_L$ kleiner als die Abmessung $h_L$ ist, sodaß die mangelnde Anpassung bei der Verwendung eines Farb-Beugungsnetzes, das an ein System von Dreiergruppen von Unterpixeln mit der Geometrie der Projektionsoptik beseitigt wird.

2. Vorrichtung zur farblichen Bildwiedergabe nach Anspruch 1, dadurch gekennzeichnet, daß die Unterpixel einer Farbe gemäß einer bezüglich der x-Achse geneigten Richtung fluchtend angeordnet sind und nicht aneinander anstoßen und daß das Zentrum jeder Linse im wesentlichen mit dem Zentrum eines Unterpixels einer bestimmten Farbe zusammenfällt.

3. Vorrichtung zur farblichen Bildwiedergabe nach einem der Ansprüche 1 und 2, dadurch gekennzeichnet, daß die Sektion der Linsen ein Rechteck ist, das dem durch jede Dreiergruppe definierten Rechteck gleicht, aber senkrecht zu der Dreiergruppe in der Ebene (Px, Py) ausgerichtet ist.

4. Vorrichtung zur farblichen Bildwiedergabe nach einem der Ansprüche 1 bis 3, dadurch gekennzeichnet, daß der Farbseparator (RC) ein Bauelement mit Phasen-Mikrostrukturen enthält (Veränderung der Indices oder der Reliefs), die durch optische Aufzeichnung in einem lichtempfindlichen Material erhalten wurden.

5. Vorrichtung zur farblichen Bildwiedergabe nach einem der Ansprüche 1 bis 4, dadurch gekennzeichnet, daß der räumliche Lichtmodulator (LCD) ein Flüssigkristallschirm ist.

6. Vorrichtung zur farblichen Bildwiedergabe nach einem der Ansprüche 1 bis 4, dadurch gekennzeichnet, daß das Netz von Linsen (MLC) auf dem räumlichen Lichtmodulator (LCD) aufliegt.

**Claims**

1. Colour display device comprising:

    - a light source (S) simultaneously emitting several ranges of chromatic components (R, G, B);
    - a spatial light modulator (LCD) comprising a set of triples aligned along an axis x and arranged along an axis y perpendicular to the x-axis, each of the triples comprising three subpixels aligned along the x-axis, each subpixel having a dimension $sp_x$ along the x-axis, each subpixel corresponding to a chromatic component (RC) which angularly splits the light of the various chromatic ranges (R, G, B), along different directions, into beams spread out along the x-axis;
    - a colour splitter (RC) which angularly splits the light of the various chromatic ranges (R, G, B) along different directions;
    - a spherical-lens array (MLC) allowing the light of each chromatic range to be focused substantially on a subpixel, the said lens array having dimensions approximately equal to those of the spatial light modulator and each lens having a cross section defined by the dimensions $l_L$ and $h_L$, the dimension $l_L$ being defined along the x-axis and the dimension $h_L$ being defined along the y-axis;
    - a projection optic (PO);

    characterized in that the cross section of a lens has the same area as that of a triple, the dimension $l_L$ being smaller than the dimension $3sp_x$ and the said dimension $l_L$ being less than the dimension $h_L$ so as to solve the inadequacy of using a dispersed chromatic grating coupled to a set of subpixel triples with the geometry of the projection optic.

2. Colour display device according to Claim 1, characterized in that the subpixels of the same colour are aligned in a direction inclined to the x-axis, and are not adjacent, and in that the centre of each lens corresponds approximately to the centre of a subpixel of the same colour.

3. Colour display device according to either of Claims 1 and 2, characterized in that the cross section of the lenses is a rectangle identical to that defined by each triple, but oriented perpendicularly to the said triple in the plane (Px, Py).

4. Colour display device according to one of Claims 1 to 3, characterized in that the colour splitter (RC) comprises a component having phase microstructures (index or relief variations) obtained by optical recording in a photosensitive material.

5. Colour display device according to one of Claims 1 to 4, characterized in that the spatial light modulator (LCD) is a liquid-crystal screen.

6. Colour display device according to one of Claims 1 to 5, characterized in that the lens array (MLC) is placed beside the spatial light modulator (LCD).

FIG.1

EP 0 717 911 B1

Diagramme des faisceaux à l'infini

FIG.2

FIG.5

| R V B | R V B | R V B | R V B | R V B | R V B |
|---|---|---|---|---|---|
| ▭ | ▭ | ▭ | ▭ | ▭ | ▭ |
| R V B | R V B | R V B | R V B | R V B | R V B |
| ▭ | ▭ | ▭ | ▭ | ▭ | ▭ |
| R V B | R V B | R V B | R V B | R V B | R V B |
| ▭ | ▭ | ▭ | ▭ | ▭ | ▭ |
| R V B | R V B | R V B | R V B | R V B | R V B |
| ▭ | ▭ | ▭ | ▭ | ▭ | ▭ |

▭ point image

# FIG.3a

| R | V | | R | V |
|---|---|---|---|---|
| ▽ | B | ▽ | | |
| B | R | V | B | |
| | ▽ | | | |
| R | V | B | R | V |
| ▽ | B | ▽ | | |
| B | R | V | B | |

▽ point image

# FIG.3b

Lentille associée

à un triplet

maillage en losange

FIG.4